# EUROPÄISCHE PATENTSCHRIFT

(11) **EP 2 906 490 B1**
(45) Veröffentlichungstag und Bekanntmachung des Hinweises auf die Patenterteilung: **26.07.2017**
(21) Anmeldenummer: 13786618.2
(22) Anmeldetag: 26.09.2013
(51) Int. Cl.: B65G 47/91, B65G 47/92, B65G 49/06

(54) **VERFAHREN UND VORRICHTUNG FÜR DAS UMSETZEN GROSSFLÄCHIGER PLATTEN IN EXTREMER ÜBERGRÖSSE**
METHOD AND APPARATUS FOR HANDLING GLASS SHEETS OF EXTREME LARGE DIMENSIONS
MÉTHODE ET APPAREIL DE MANIPULATION DE FEUILLES DE VERRE DE TRÉS GRANDES DIMENSIONS

(30) Priorität: 09.10.2012 DE 102012019841
(43) Veröffentlichungstag der Anmeldung: 19.08.2015
(73) Patentinhaber: Grenzebach Maschinenbau GmbH, 86663 Asbach-Baeumenheim (DE)
(72) Erfinder: HERFERT, Christian, 86462 Langweid (DE)
(74) Vertreter: Kindermann, Peter
(86) Internationale Anmeldenummer: PCT/DE2013/000550
(87) Internationale Veröffentlichungsnummer: WO 2014/056470

(56) Entgegenhaltungen:
- DE-B3-102009 025 500
- DE-U1-202007 003 907
- US-A1- 2003 062 245
- US-A1- 2004 240 981
- US-A1- 2006 099 064
- US-A1- 2011 247 914

## Beschreibung

Die Erfindung betrifft das Umsetzen großflächiger Platten, insbesondere Glasplatten, in extremer Übergröße. Unter extremer Übergröße werden hier Abmessungen über 40 Metern in der Länge und über 6 Metern in der Breite verstanden. Bevorzugt handelt es sich um Glasplatten.

Die Herstellung großflächiger Glasplatten erfolgt in der Form von Floatglas durch das fortlaufende Ausgießen einer Glasschmelze auf einem in einer länglichen Wanne erhitzten Zinnbad und das sich hieraus ergebende Glasband. Dieses Glasband weist eine Seite auf die auf dem Zinnbad lag, die so genannte Badseite. Die andere Seite des Glasbandes die an der Luft abgekühlt wurde, wird als die so genannte Luftseite bezeichnet. Die Badseite und die Luftseite weisen unterschiedliche Eigenschaften auf. Da zum Beispiel die Luftseite weniger Unebenheiten aufweist eignet sie sich besser für Beschichtungen. Das anschließende Konfektionieren des Floatglases geschieht durch Längsschneiden und Querschneiden des aus der Floatglasfertigung mit einer bestimmten Vorschubgeschwindigkeit auslaufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern. Auf diese Weise können Glasplatten von beträchtlicher Größe hergestellt werden. Als so genanntes Bandmaß oder Großformat wird hierbei eine Größe von 6 Meter mal 3,21 Meter bezeichnet. Als so genanntes geteiltes Bandmaß oder Mittelformat wird eine Plattengröße von 3,21 Meter mal 2 Meter (bis 2,5 Meter) bezeichnet.

Um Glasplatten von solcher Größe bruchfrei von einem Ort zu einem anderen zu transportieren, werden hierzu Haltemechanismen, meist in der Form eines in sich stabilen Rahmens, an die betreffende Glasplatte heranbewegt, mit diesem über Saugnäpfe verbunden, und dann wird der Haltemechanismus mit der daran angesaugten Glasplatte weiter befördert.

Aus dem Stand der Technik ist aus der DE 197 12 368 A1 ein Verfahren zum Versetzen von Gegenständen von einer ersten Stelle zu einer zweiten Stelle unter Verwendung eines den Gegenstand während des Versetzens an sich bindenden Haltemechanismus bekannt, bei dem die Aufgabe gelöst werden soll, dieses Verfahren derart weiterzubilden, dass auf einfache Weise ein unter allen Umständen sicheres Versetzen von Gegenständen durchgeführt werden kann. Als zu versetzende Gegenstände werden dabei Glasscheiben genannt.

Aus der US 2004/240981 A1 ist eine Vorrichtung und ein Verfahren gemäß dem Oberbegriff der Patentansprüche 1 und 4 bekannt.

Aus der Druckschrift DE 20 2007 003 907 U1 ist eine Vorrichtung und ein Verfahren zum automatischen Sortieren von Glasplatten bekannt, welche ein möglichst geringes Bauvolumen aufweist.

Die Druckschrift US 2003/062245 A1 zeigt eine Vorrichtung und ein Verfahren zum Umsetzen von Glasplatten von einem Platten-Transport-Gerät zu einem Platten-Stapel-Gestell mittels Saugrahmen.

Ferner offenbart die Druckschrift US2006/0099064A1 eine Vorrichtung und ein Verfahren zum Umsetzen von Glasplatten, wobei eine Kanten-Erfassungsvorrichtung eine Vielzahl von Sensoren aufweist, die Kanten der Glasplatten erfassen und somit eine Beschädigung der Glaskanten zuverlässig verhindern.

Aus der Druckschrift US 2011/247914 A1 sind eine weitere herkömmliche Vorrichtung sowie ein zugehöriges Verfahren zum Umsetzen großflächiger Platten bekannt, wobei Sensoren zum Erfassen eines Füllzustands eines Stapelbehälters verwendet werden.

Ferner sind aus der Druckschrift DE 10 2009 025 500 B3 ein Verfahren und eine Vorrichtung zum Entfernen einer Zwischenlage senkrecht orientierter Glasplattebekannt, wobei Sensoren zur Erfassung eines Hubweges eines Flachsaugers verwendet werden und Korrekturen an der Lage eines Saugerrahmens vorgenommen werden können.

In der DE 101 48 038 A1 ist eine Einrichtung zur Plattenübergabe von einem Plattenförderer auf ein Stapelgestell oder dergleichen beschrieben, mit einem Roboter mit einem Roboterarm der an seinem freien Ende einen Saugrahmen oder dergleichen zum Aufnehmen einer Platte vom Plattenförderer trägt, und der mit einer für seine Bewegungsfunktion ausreichenden Anzahl von Freiheitsgraden ausgestattet ist.
Der Weiterbildung einer solchen Einrichtung liegt die Aufgabe zugrunde, eine Einrichtung zur Plattenübergabe von einem Plattenförderer auf ein Stapelgestell so auszubilden, dass, im Falle einer Glasplatte, möglichst keine Beeinträchtigung der Luftseite des Glases erfolgt. Hierbei ist der Plattenförderer mit einer Aussparung, in welche der Roboterarm eintauchen kann, und mit, ein Eintauchen auch des Saugrahmens oder dergleichen ermöglichenden, Aussparungen versehen. Ferner soll der Saugrahmen oder dergleichen am freien Ende des Roboterarms in eine nach oben weisende Position schwenkbar angeordnet sein, um aus der in die Aussparungen des Plattenförderers eintauchenden Position eine Platte an ihrer dem Plattenförderer zugewandten Seite zu ergreifen.
Das hier verwendete Stapelgestell ist unbeweglich am Boden befestigt, es kann somit nur von der, dem Roboterarm zugewandten, Seite bestückt werden. Außerdem muss das Stapelgestell jeweils beim Beladen mit einer weiteren Glasplatte um die geringe Distanz der Dicke einer Glasplatte vom Roboterarm weggerückt werden, da der Abstand des Roboterarms eine feste Größe darstellt. Hierzu sind in der Praxis beim derzeitigen Stand der Technik so genannte Taktschlitten notwendig, die das Stapelgestell jeweils vor dem Beladen mit einer neuen Glasplatte um die Distanz einer Glasplatten - Dicke vom Roboterarm wegrücken, um den Platz für eine weitere Glasplatte frei zu machen. Ferner ist zum Beladen des Stapelgestells von der anderen Seite eine Drehscheibe notwendig. Für das Beladen des Stapelgestells mit großen und schweren Glasplatten sind der benötigte Taktschlitten und die erforderliche Drehscheibe der auftretenden Belastung gemäß aufwendig konstruiert und in der Herstellung sehr teuer.

Weiter ist aus dem Stand der Technik, ohne druckschriftlichen Nachweis, bekannt geworden, dass Glasplatten bis 16 Metern Länge und 4 Metern Breite mit extrem stark dimensionierten Bauteilen gehandhabt wurden. Bei diesen Dimensionen erschöpften sich jedoch die Möglichkeiten der normalen Technik.

Der erfindungsgemäßen Vorrichtung bzw. dem entsprechenden Verfahren liegt deshalb die Aufgabe zugrunde, bei normaler Lage sehr großer Glasplatten in Größt -Abmessungen, das heißt über 40 Metern Länge und über 6 Metern Breite, auf der Fertigungslinie in kürzester Zeit zu erfassen, schwingungsfrei aufzunehmen und sicher zu stapeln. Da eine solche Platte auch beschichtet werden muss und eine solche Beschichtung meist auf der glatteren Seite, nämlich der Luftseite, aufzubringen ist, ist es notwendig, diese Platte auch von der Gegenseite, nämlich der Badseite her erfassen zu können.

Diese Aufgabe wird mit einer Vorrichtung mit den Merkmalen des Anspruchs 1, bzw. einem entsprechenden Verfahren nach Anspruch 6 gelöst.

In den Unteransprüchen sind weitere vorteilhafte Ausgestaltungen der Erfindung gekennzeichnet.

Im Folgenden wird die Erfindung anhand von Figuren näher beschrieben. Es zeigen im Einzelnen:
- Fig.1:: eine perspektivische Darstellung eines Teils der Gesamtvorrichtung
- Fig.2:: eine Schnittzeichnung durch die Gesamtvorrichtung
- Fig.3:: eine weitere Schnittzeichnung durch die Gesamtvorrichtung
- Fig.4:: eine Detailzeichnung der Gesamtvorrichtung
- Fig. 5:: einen Schnitt durch einen Power - Sauger 26
- Fig. 6:: einen Schnitt durch einen Präzisions - Sauger 27
- Fig. 7:: ein Verteil - Schema von Greif - Elementen

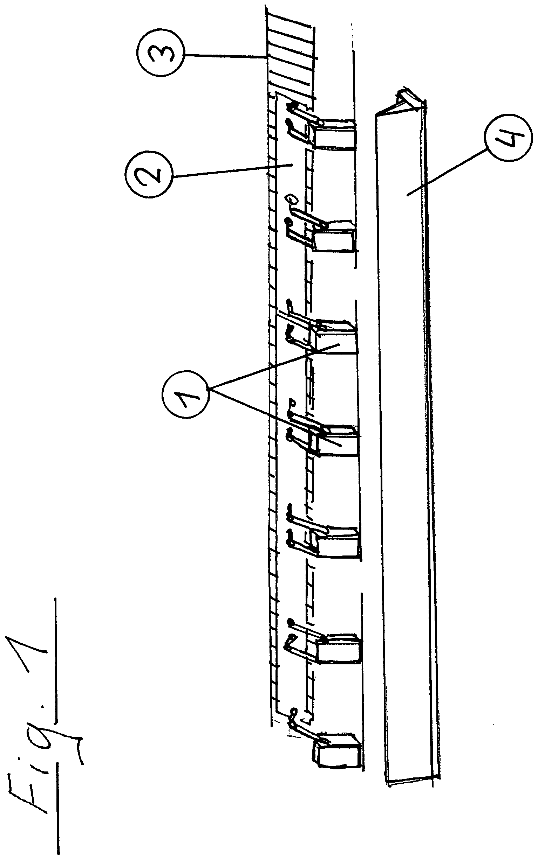

Die Fig. 1 zeigt eine perspektivische Darstellung eines Teils der erfindungsgemäßen Gesamtvorrichtung. Da es sich bei der erfindungsgemäßen Vorrichtung um das Befördern von Glasplatten in extremer Übergröße, nämlich in der Größenordnung von über 40 Metern Länge und über 6 Metern in der Breite handelt, ist ersichtlich, dass in der Fig.1 nicht die ganze Beförderungsanlage in ihrer gesamten Länge dargestellt werden kann. Dies erscheint auch nicht notwendig, da die Struktur der Beförderungsmittel sich auf der gesamten Läge der Anlage nicht ändert.
Eine Anlage zur Beförderung einer solch großen Glasplatte erscheint weltweit einmalig. Deshalb gibt es offensichtlich auch keine Vorbilder zur Lösung der hier vorliegenden Aufgabe.
In der Fig. 1 ist zu erkennen wie eine Batterie von nebeneinander angeordneten Stapelrobotern 1 eine Glasplatte 2 von einer Transportvorrichtung 3 hebt. Es sind hier beispielhaft lediglich sieben Stapelroboter 1 dargestellt. Als Transportvorrichtung 3 kann hier beispielhaft ein üblicherweise verwendeter, aber abgewandelter, Rollenförderer wie er ein Glasband vom Schmelzofen weiterbefördert, gesehen werden.
Mit der Länge der zu befördernden Glaspatte 2 erhöht sich natürlich auch die Anzahl der benötigten Stapelroboter 1, wobei sich das Gesamtgewicht einer Glasplatte 2 auf die zur Verfügung stehenden Stapelroboter 1 verteilt. Mit der Erhöhung der Breite einer zu befördernden Glasplatte 2 erhöht sich natürlich auch deren Gewicht zusätzlich. Auch dies wirkt sich naturgemäß auf die Dichte der nebeneinander angeordneten Stapelroboter 1, also ebenfalls ihrer Anzahl, aus.
Im Vordergrund der perspektivischen Darstellung der Fig.1 ist ein Teil eines, über die gesamte Läge einer Glasplatte 2 sich erstreckenden, Stapelregals 4 zu erkennen, das nach dem Umsetzen einer Glasplatte 2 als vorübergehendes Aufnahmelager dient.

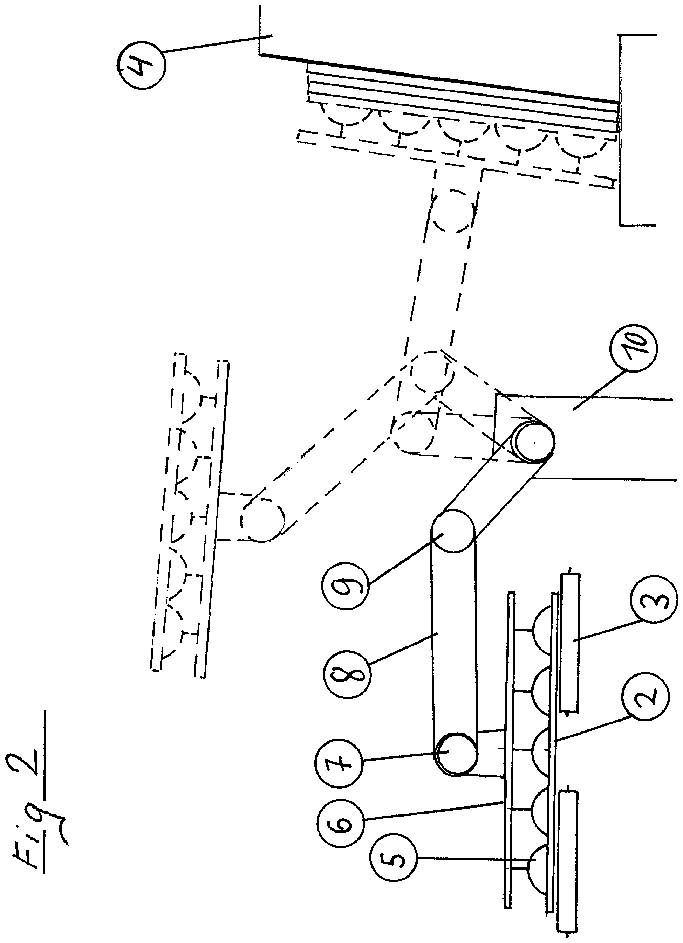

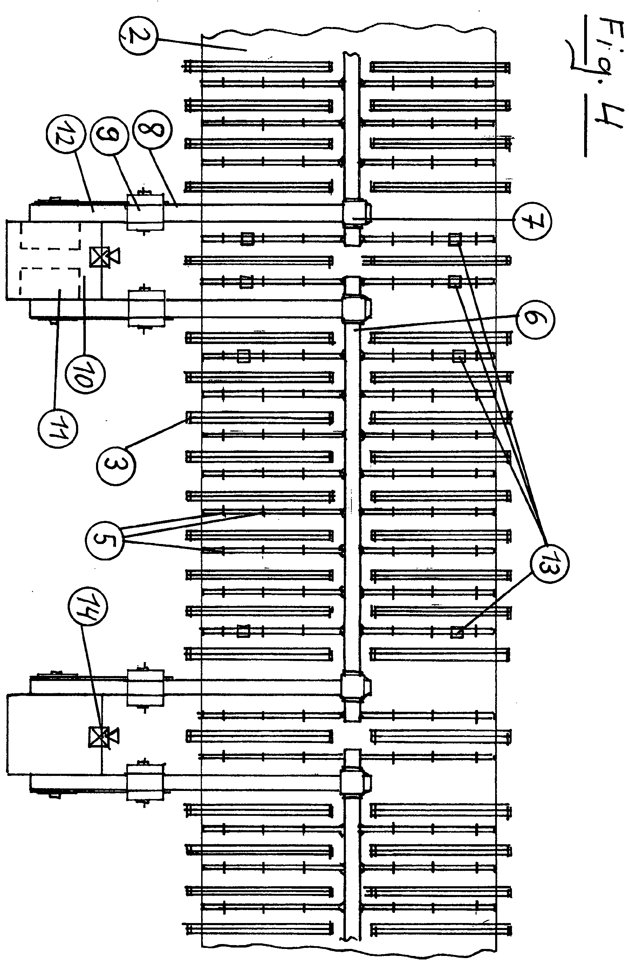

In der Fig. 2 ist eine Schnittzeichnung durch die Gesamtvorrichtung dargestellt.
In der Mitte der Fig. 2 ist als zentrales Drehlager ein Teil eines Roboter - Grundrahmens 10 zu erkennen, der einen Roboterarm 8 trägt. Der Roboterarm 8 ist auf der einen Seite über ein Drehgelenk 9 mit Synchronantrieb und einen Hauptarm 12 drehbar an dem Grundrahmen 10 angelenkt und trägt auf der anderen Seite einen Schwenkkopf 7.
Der Schwenkkopf 7 trägt einen Saugerrahmen 6 der wiederum mit einer Anzahl an Saugern 5 bestückt ist. Zur näheren Erläuterung der Anordnung der Sauger 5 wird auf die Fig. 4 verwiesen. Die beispielhaft gezeigten fünf Sauger 5 sind, hier stilistisch dargestellt, mit der Glasplatte 2 verbunden, die selbst auf der Transportvorrichtung 3 aufliegt. Die Transportvorrichtung 3 besteht aus zwei parallel im Abstand verlaufenden Rollenförderern.
Der gestrichelt gezeichnete Teil der Fig.2 zeigt zwei Stationen des Bewegungsablaufs eines Roboterarms 8 mit einer Glasplatte 2. In der oberen Lage des Roboterarms 8 ist die Glasplatte 2 quasi "über Kopf" von der Transportvorrichtung 3 auf der Luftseite abgehoben und in der rechten Lage wird die Glasplatte 2 gerade auf dem Stapelregal 4 als vierte Glasplatte abgesetzt.
Die Verwendung eines Stapelroboters 1 hat an dieser Stelle noch den entscheidenden Vorteil, dass das Stapelregal 4 bei dem Aufsetzen einer weiteren Glasplatte 2 nicht um die Dicke einer Glasplatte 2 verrückt werden muss, da diese Abstandsänderung bereits von der Steuerung des Roboterarms 8 berücksichtigt werden kann. Müsste das Stapelregal jeweils um den Abstand, den die Dicke einer Glasplatte 2 ausmacht, verrückt werden, würde dies sehr kostenintensive Maßnahmen erfordern, da hierbei einerseits Bauteile zu verwenden sind die sehr stabil ausgeführt sein müssen und andererseits aber mit hoher Präzision zu bewegen sind.

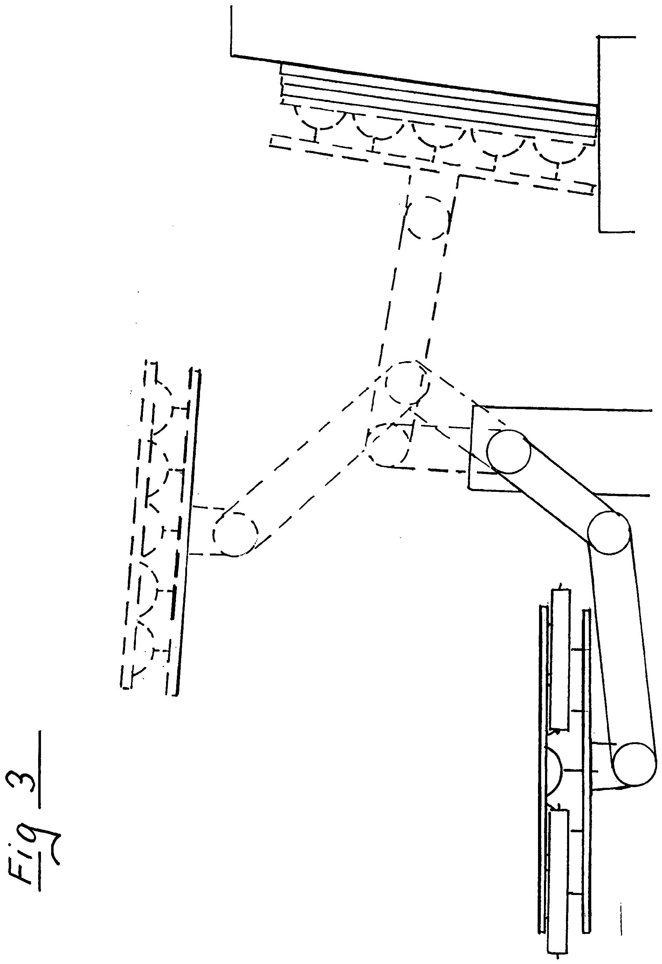

Die Fig. 3 zeigt eine weitere Schnittzeichnung durch die Gesamtvorrichtung.
In der Fig. 3 ist dargestellt, wie ein Stapelroboter eine Glasplatte von der Unterseite, also der Badseite her, ergreift und durch entsprechende Lücken in der Transportvorrichtung die Glasplatte, dieses Mal mit der Luftseite nach oben, auf einem Stapelregal abstellt. Hierbei ist natürlich zu beachten, dass die Stapelroboter 1 vor dem Einlaufen der umzusetzenden Glasplatte unter die
Transportvorrichtung 3 verschwenkt werden. Dass die Transportvorrichtung 3 aus nebeneinander im Abstand parallel laufenden Rollenförderern besteht ist auch aus der Fig.2 und der Fig.4 zu ersehen. Um das sichere Hindurchtreten der Stapelroboter 1 durch die Transportvorrichtung 3 zu gewährleisten und die Position der Stapelroboter an besondere Formate von Glasplatten 2 anpassen zu können, sind die einzelnen Rollen , mittels besonderer Stellmotoren. die nicht gesondert bezeichnet sind, horizontal in ihrer Position verschieblich gestaltet. Diese Variabilität der Position der einzelnen Rollen der Transportvorrichtung 3 ist auch für den im Folgenden beschriebenen Sonderfall von Vorteil.

Da es für das Umsetzen besonders schwerer Glasplatten 1 notwendig werden kann, die Batterie der benötigten Stapelroboter zu verdichten, das heißt, eine größere Anzahl von Stapelrobotern 1 nebeneinander zu setzen, ist es in einer besonderen Bauform vorgesehen, die Abstände der verwendeten Stapelroboter 1 variabel zu gestalten und die Verbindung der Saugerrahmen 6 untereinander zu trennen und jeweils jedem Stapelroboter auf der linken und der rechten Seite einen Saugrahmen 6 zuzuordnen. Hierbei kommt den Lasersensoren 13, die in der Fig.4 beschrieben sind, eine besondere Bedeutung zu. Denn mit Hilfe dieser Lasersensoren 13 können die Saugrahmen 6 zusätzlich so miteinander koordiniert werden, dass sie quasi wie mit einer starren Verbindung agieren könnten.
In einer weiteren besonderen Bauform sind die jeweils zu einem Stapelroboter links und rechts gehörenden Saugerrahmen 6 so ausgestaltet, dass ihre Endstücke in der Länge variabel sind. Die jeweiligen Querstege, vgl. hierzu auch die Beschreibung zu Fig.4, sind ausfahrbar. Somit können die Saugerrahmen 6 an die variablen Abstände der Roboter - Grundrahmen 10 angepasst werden.

Die Fig. 4 zeigt eine Detailzeichnung der Gesamtvorrichtung.

Als an den beiden Querseiten unterbrochenes Rechteck ist hier von oben die Glasplatte 2 zu erkennen, die auf den Rollen einer, in der Länge aufgeteilten, Transportvorrichtung 3 aufliegt. Die in der Fig. 2 beschriebenen Grundrahmen 10 mit ihren beiden Hauptantrieben 11 sind hier in zweifacher Ausführung von oben zu erkennen. Sie tragen jeweils auf ihren beiden Seiten einen Roboterarm 8, wobei in dem dargestellten Beispiel die vier Roboterarme 8, die von den beiden gezeigten Roboter - Grundrahmen 10 über die jeweiligen Hauptarme 12 und die zugehörigen Drehgelenke 9 bewegt werden, miteinander an den betreffenden Schwenkköpfen 7 über Saugerrahmen 6 mechanisch verbunden sind. Diese Saugerrahmen 6 tragen kammartig angeordnete Querstege die wiederum die Sauger 5 tragen. Von diesen Querstegen weisen beispielhaft in ihren Endbereichen vier Stück jeweils Lasersensoren 13 auf von denen nur die im oberen Bereich der Fig. 4 aus darstellerischen Gründen bezeichnet sind.
Diese Lasersensoren 13 sind in der Lage Laserstrahlen zur Kommunikation mit dem jeweils benachbarten Saugrahmen 6 auszusenden, jedoch auch solche Laserstrahlen als Kommunikationssignale zu empfangen. Sie können deshalb die Steuerung der Antriebe 11 eines Roboter - Grundrahmens 10 koordinieren. Auf diese Weise ist es einer zentralen Steuerung möglich, sämtliche, für die Beförderung der jeweiligen Glasplatte 2 benötigten, Saugerrahmen 6 in einer Reihe und in einer Höhe geradlinig auszurichten. Da solche benachbarten Lasersensoren 13 auch diagonal kommunizieren können, ist es auf diese Weise möglich Verwindungen einzelner Saugerrahmen 6 zu detektieren und steuerungstechnisch zu korrigieren. Die auf diese Weise steuerungstechnisch definierte Ebene der Gesamtheit der jeweils verwendeten Saugerrahmen 6 bildet die Ausgangsbasis für die Bestimmung der Abstände der einzelnen, an dieser Stelle Haftelemente genannten, Sauger oder elektrostatischen Greifer, zu der Glasplatte 2. Da jedes der betreffenden Haftelemente ein anderes Druckverhalten, bzw. Dämpfungsverhalten beim Anhaftvorgang aufweist, kann auf diese Weise mittels des Aufbaus eines, zumindest gruppenweise, individuellen Saugdrucks, bzw. Anhaftdrucks, über die gesamte Fläche einer Glasplatte 2 ein relativ konstanter Anpressdruck erreicht werden. Hierzu sind gruppenweise orientierte zusätzliche Abstandssensoren vorgesehen, die aus Gründen der Übersicht nicht extra eingezeichnet und auch nicht mit Bezugszeichen versehen sind. Im Prinzip lässt sich natürlich jedem einzelnen Haftelement ein solcher Sensor zuordnen, jedoch sind bei der Behandlung einer solch großen Glasplatte 2 wegen der resultierenden Datenfülle weniger technische als ökonomische Grenzen zu sehen.
Hinsichtlich der verwendeten Lichtfeldsensoren 14, die jeweils zwischen zwei Roboterarmen 8 eingezeichnet sind, wird auf die neue Entwicklung der so genannten Minilinsen verwiesen, die in der Form von hunderten von Minilinsen nach dem Lichtfeldprinzip optische Informationen sammeln die dann später zu Bildern mit einer gewünschten Auflösung und / oder einem gewünschten Blickwinkel datentechnisch zusammengestellt werden können. Solche Minilinsen sind 3 - D - fähig, billig herzustellen und folgen dem Prinzip eines Insektenauges. Sie sind in der Lage zur übergeordneten datentechnischen Koordination der beteiligten Haftelemente über den gesamten Bereich der Glasplatte 2 beizutragen.

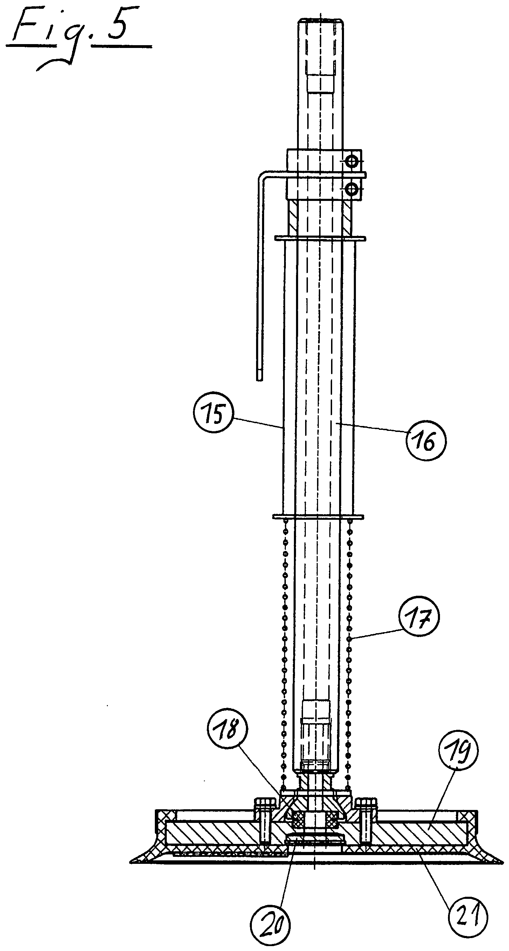

Die Fig. 5 zeigt einen Schnitt durch einen Power - Sauger 26.
Dieser Typ Sauger besteht im Wesentlichen aus einem Saugerschaft 16 der in einem Führungs - und Halterungsrohr 15 steckt und aus einem an diesem befestigten Saugerteller 19. Eine Ausgleichsfeder 17, die zwischen dem Führungs - und Halterungsrohr 15 und dem Saugerteller 19 gelagert ist, sorgt einerseits für ein sanftes Aufsetzen des Saugertellers 19 auf der Glasplatte 2 und andererseits unterstützt sie bei einer Schrägstellung die flexible Saugertellerhalterung 18. Diese Saugtellerhalterung 18 ist aus einem weichen, aber gut stoßdämpfenden Material gefertigt und stellt eine harmonische Verbindung zwischen dem Saugerschaft 16 und dem Saugerteller 19 dar. Die kreisförmige Saugermanschette 21 mit ihrer besonders haftfähigen Randlippe stellt die eigentliche Verbindung zu der Glasplatte 2 her. Der Saugerteller 19 weist in seiner Mitte ein kreisförmiges Filterelement 20 auf. Dieses dient dem Zweck feine Glaspartikel von der zum Betrieb benötigten, hier nicht näher bezeichneten, Vakuumpumpe fernzuhalten. Es kann entweder von Hand gereinigt werden oder in bestimmten Abständen ausgewechselt werden. Durch einen nicht extra gezeigten Sensor kann der Durchlasswiderstand des Filterelements 20 eines jeden Saugers 26 in einer besonderen Ausbaustufe erfasst und an einem Monitor angezeigt werden.
Weiterhin kann es vorgesehen sein, dass einzelne Sauger einzeln für sich abschaltbar sind und / oder mit einstellbarer Unterdruck - Luft beaufschlagt werden können.

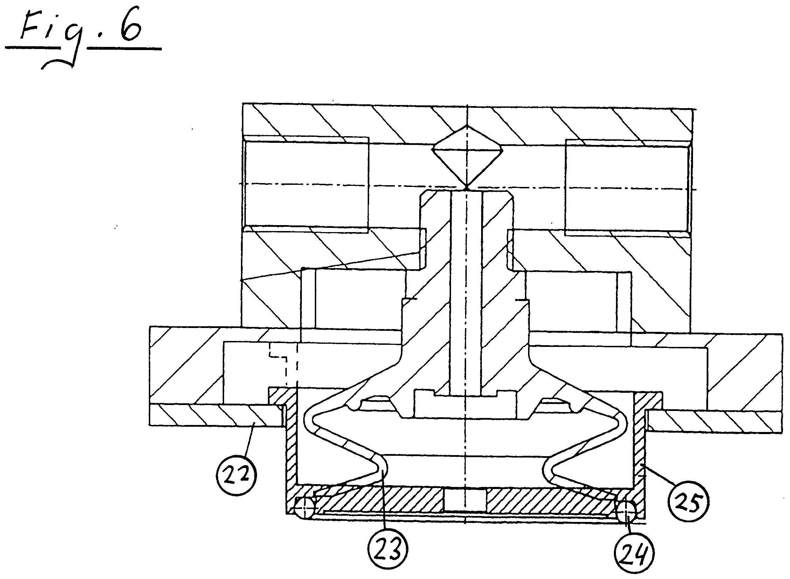

Die Fig.6 zeigt einen Schnitt durch einen Präzisions - Sauger 27.
In dieser Darstellung ist die spezielle Wirkung dieses Saugers zu erkennen. Da es bei den aufzunehmenden Scheiben, wichtig ist, dass diese absolut in ebener Lage transportiert und aufgebracht werden, muss auch bei jedem Saugerkopf die Fläche, mit der die jeweilige Scheibe von dem jeweiligen Saugerkopf berührt wird, absolut eben sein. Dies wird dadurch erreicht, dass in der gezeigten Darstellung ein Dichtring 24 in einem Saugerkopf 25 aus festem Material geführt ist. Der Saugerkopf 25 gleitet hierbei zusammen mit einem Gummibalg 23 in einer Halteplatte 22. Ein wellenförmiges Verbiegen der aufgenommenen Scheibe an den Stellen der Angriffspunkte der jeweiligen Sauger, wie bei anderen Ausführungen im Stand der Technik mit flexibler Dichtlippe zu befürchten, ist hierbei ausgeschlossen. Der Saugerkopf 25 kann hierbei zum Beispiel auch annähernd quadratisch sein oder eine andere beliebige Flächenform aufweisen, die in der jeweils aufgenommenen Scheibe möglichst wenig mechanische Spannung induziert. So kann zum Beispiel in diesem Zusammenhang eine elliptisch geformte Fläche zur Reduzierung der Spannungen während der Aufnahme und des Transports in der jeweiligen Scheibe beitragen.

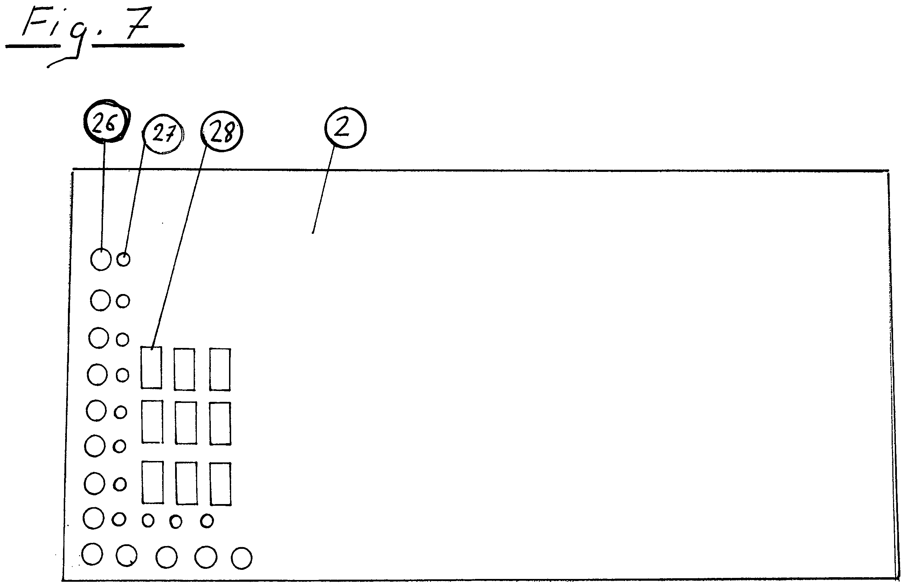

In der Fig. 7 ist ein Verteil - Schema von Greif - Elementen skizziert.
Bisher wurden die Struktur und die Funktion der Saugrahmen 6 behandelt, wobei lediglich von Saugern 5, gewissermaßen als alleinigen Funktionsträgern, gesprochen wurde. In der Fig.7 wird näher dargelegt, dass es für die Beförderung und den Schutz einer solch riesigen Glasplatte 2 notwendig ist die verwendeten Kammgreifer mit verschiedenen Arten von Saugern 5 zu bestücken.
So ist hier beispielhaft an einer stilisierten Glasplatte 2 dargestellt, dass im Randbereich bevorzugt so genannte Power - Sauger 26 neben, mehr der exakten Fixierung dienenden, so genanten Präzisions - Saugern 27 zur Anwendung kommen.
Da es für die spätere Beschichtung einer Glasplatte 2 auf der Luftseite wichtig ist in der Mitte keine Abdrücke von Saugerringen zu haben werden in diesem Bereich bevorzugt so genannte elektrostatische Greifer 28 oder Ultraschallgreifer verwendet. Solche elektrostatischen Greifer sind Stand der Technik und können quer zur Werkstückoberfläche Kräfte von bis zu 20 N/cm² übertragen (Ref.Nr.: 1981 RWTH Aachen). Auch die Ultraschallgreifer sind Stand der Technik.

Die Stapelroboter sind auch einzeln verwendbar, insbesondere in schneller Betriebsart durch direktes Durchschwenken im Luftbetrieb.

Die Steuerung der komplexen Bewegungsvorgänge und die Signalverarbeitung der verwendeten Sensoren erfordern ein spezielles Steuerungsprogramm.

### Bezugszeichenliste

- 1: Stapelroboter
- 2: Glasplatte
- 3: Transportvorrichtung
- 4: Stapelregal
- 5: Sauger
- 6: Saugerrahmen
- 7: Schwenkkopf
- 8: Roboterarm
- 9: Drehgelenk mit Synchron - Antrieb
- 10: Roboter - Grundrahmen
- 11: Hauptantrieb
- 12: Hauptarm
- 13: Lasersensoren
- 14: Lichtfeldsensoren
- 15: Führungs - und Halterohr
- 16: Saugerschaft
- 17: Ausgleichsfeder
- 18: Flexible Saugertellerhalterung
- 19: Saugerteller
- 20: Filterelement
- 21: Saugermanschette
- 22: Halteplatte
- 23: Gummibalg
- 24: Dichtring
- 25: Saugerkopf
- 26: Powersauger
- 27: Präzisionssauger
- 28: Elektrostatischer Greifer

## Patentansprüche

1. Vorrichtung für das Umsetzen großflächiger Platten, insbesondere Glasplatten, mit den folgenden Merkmalen:
a) einer mit Förderrollen ausgestatteten Transportvorrichtung (3), wobei die Förderrollen in zwei, mit Abstand parallel verlaufenden Bahnen verlaufen, und die Förderrollen einzeln angetrieben werden,
b) einer Vielzahl von nebeneinander angeordneten Stapelrobotern (1), die jeweils zwei schwenkbare Hauptarme (12), ein angelenktes Drehgelenk (9) mit Synchronantrieb, einen daran angelenkten Roboterarm (8) mit einem Schwenkkopf (7) und einen daran befestigten Saugerrahmen (6) aufweisen,
c) einer Vielzahl von Haftelementen (5) die von kammartig angeordneten Querstegen an den Saugerrahmen (6) getragen werden, und
d) einem Stapelgestell (4) auf dem eine Platte, insbesondere Glasplatte (2), mit der Luftseite oder mit der Badseite nach oben aufgesetzt werden kann, wobei
e) dass für das Umsetzen der großflächigen Platten, insbesondere Glasplatten, in extremer Übergröße in der Größenordnung über 40 Metern Länge und über 6 Metern Breite eine Aufnahme von der Badseite oder der Luftseite möglich ist, die Förderrollen in zwei, mit Abstand parallel verlaufenden Bahnen verlaufen, wobei der horizontale Abstand der Förderrollen untereinander verändert werden kann,
f) dass die Saugerrahmen (6) Lasersensoren (13) zur Koordinierung der Position benachbarter Saugerrahmen (6) tragen, indem die Lasersensoren (13) in der Lage sind Laserstrahlen zur Kommunikation mit dem jeweils benachbarten Saugerrahmen (6) auszusenden, jedoch auch solch Laserstrahlen als Kommunikationssignale zu empfangen, somit sie die Steuerung von Antrieben (11) eines Roboter-Grundrahmens (10) koordinieren können,
g) dass zur Koordinierung der Position der gesamten Glasplatte (2) jeweils die Roboter-Grundrahmen (10) Lichtfeldsensoren (14) aufweisen, die in der Lage sind zur übergeordneten datentechnischen Koordination der beteiligten Haftelemente über den gesamten Bereich der Glasplatte (2) beizutragen, und
h) dass die einzelnen Rollen der Transportvorrichtung (3) mittels besonderer Stellmotoren horizontal in ihrer Position verschieblich sind.

2. Vorrichtung nach Anspruch 1, **dadurch gekennzeichnet, dass** die Abstände der verwendeten Stapelroboter (1) variabel gestaltet werden und die Verbindung der Saugerrahmen (6) untereinander getrennt wird und jeweils jedem Stapelroboter (1) auf der linken und der rechten Seite ein Saugerrahmen (6) zugeordnet wird, wobei mittels der Lasersensoren (13) die Saugerrahmen (6) zusätzlich so miteinander koordiniert werden, dass diese wie eine starre Verbindung wirken.

3. Vorrichtung nach Anspruch 2, **dadurch gekennzeichnet, dass** die jeweils zu einem Stapelroboter (1) links und rechts gehörenden Saugerrahmen (6) so ausgestaltet sind, dass ihre Endstücke in der Länge variabel sind.

4. Vorrichtung nach einem der vorhergehenden Ansprüche, **dadurch gekennzeichnet,**
**dass** an den Querstegen der Saugerrahmen (6) Power-Sauger (26) und/oder Präzisions-Sauger (27) und/oder Ultraschallgreifer eingesetzt werden, wobei ein Power-Sauger (26) ein kreisförmiges Filterelement (20) aufweist und der Durchlasswiderstand eines Filterelements (20) erfasst und an einem Monitor angezeigt wird, und wobei ein Präzisions-Sauger (27) einen Dichtring (24) aufweist, der in einem Saugkopf (25) aus festem Material geführt ist.

5. Vorrichtung nach einem der vorhergehenden Ansprüche, **dadurch gekennzeichnet,**
**dass** bei zu beschichtenden Glasplatten (2) zur Umsetzung auf der Luftseite bevorzugt elektrostatische Greifer (28) und/oder Ultraschallgreifer verwendet werden.

6. Verfahren für das Umsetzen großflächiger Platten, insbesondere Glasplatten, mit den folgenden Verfahrensschritten:
a) die, auf Förderrollen einer Transportvorrichtung (3) angelieferten, Glasplatten (2) werden mittels einer, sich über die gesamte Länge der Glasplatte (2) erstreckenden, jeweils auf Roboter-Grundrahmen (19) installierten, Vielzahl von Stapelrobotern (1) mittels schwenkbarer Saugerrahmen (6) und daran befestigten Saugern (5) erfasst, und
b) die so erfasste Platte, insbesondere Glasplatte (2), wird von der Vielzahl der Stapelroboter (1) gemeinsam verschwenkt und auf einem Stapelregal (4) abgesetzt,
**dadurch gekennzeichnet**,
c) dass für das Umsetzen der großflächigen Platten, insbesondere Glasplatten, in extremer Übergröße in der Größenordnung über 40 Metern Länge und über 6 Metern Breite eine Aufnahme von der Badseite oder der Luftseite möglich ist,
d) dass die Saugerrahmen (6) Lasersensoren (13) zur Koordinierung der Position benachbarter Saugerrahmen (6) tragen, und
e) dass zur Koordinierung der Position der gesamten Glasplatte (2) jeweils die Roboter-Grundrahmen (10) Lichtfeldsensoren (14) aufweisen, die in der Lage sind zur übergeordneten datentechnischen Koordination der beteiligten Haftelemente über den gesamten Bereich der Glasplatte (2) beizutragen.

7. Verfahren nach Anspruch 6, **dadurch gekennzeichnet,**
**dass** an den Querstegen der Saugerrahmen (6) Power-Sauger (26) und/oder Präzisions-Sauger (27) eingesetzt werden.

8. Verfahren nach Anspruch 6 oder 7, **dadurch gekennzeichnet,**
**dass** bei zu beschichtenden Glasplatten (2) zur Umsetzung auf der Luftseite bevorzugt elektrostatische Greifer (28), und/oder Ultraschallgreifer verwendet werden.

9. Verfahren nach einem der Ansprüche 6 bis 8, **dadurch gekennzeichnet,**
**dass** die Stapelroboter (1) einzeln verwendet werden, insbesondere in schneller Betriebsart durch direktes Durchschwenken im Luftbetrieb.

## Claims

1. Apparatus for repositioning panels, in particular glass panels, of large surface area, comprising the following features:
a) a transportation apparatus (3) which is equipped with conveying rollers, wherein the conveying rollers run in two tracks which run in parallel and at a distance, and the conveying rollers are driven individually,
b) a large number of stacking robots (1) which are arranged next to one another and which each have two pivotable main arms (12), a rotary joint (9) which is connected in an articulated manner and has a synchronous drive, a robot arm (8) which is connected to said rotary joint in an articulated manner and has a pivot head (7), and a suction device frame (6) which is fastened to said robot arm,
c) a large number of adhesive elements (5) which are supported on the suction device frame (6) by transverse webs which are arranged in a comb-like manner, and
d) a stacking framework (4) on which a panel, in particular a glass panel (2), can be set down with the air side or with the bath side at the top,
wherein
e) for repositioning the panels, in particular glass panels, of large surface area and of extreme size in the order of greater than 40 meters in length and greater than 6 meters in width, said panels can be held from the bath side or from the air side, the conveying rollers run in two tracks which run in parallel and at a distance, wherein the horizontal distance of the conveying rollers in relation to one another can be varied,
f) the suction device frames (6) are fitted with laser sensors (13) for coordinating the position of adjacent suction device frames (6) by the laser sensors (13) being able to emit laser beams for the purpose of communication with the respectively adjacent suction device frame (6), but also to receive laser beams of this kind as communication signals, so that said laser sensors can coordinate the control of drives (11) of a robot basic frame (10),
g) the robot basic frames (10) each have light field sensors (14) for coordinating the position of the entire glass panel (2), which light field sensors are able to contribute to superordinate data-related coordination of the adhesion elements involved over the entire region of the glass panel (2), and
h) the position of the individual rollers of the transportation apparatus (3) can be shifted horizontally by means of particular actuating motors.

2. Apparatus according to Claim 1, **characterized in that** the distances between the stacking robots (1) used are variable and the connection of the suction device frames (6) between one another is broken and a suction device frame (6) is assigned to each stacking robot (1) on the left-hand and the right-hand side in each case, wherein the suction device frames (6) are additionally coordinated with one another by means of the laser sensors (13) such that they act in the manner with a rigid connection.

3. Apparatus according to Claim 2, **characterized in that** the suction device frames (6) which are in each case associated with a stacking robot (1) on the left-hand side and on the right-hand side are designed such that the end pieces thereof are of variable length.

4. Apparatus according to either of the preceding claims, **characterized**
**in that** power suction devices (26) and/or precision suction devices (27) and/or ultrasonic grippers are employed on the transverse webs of the suction device frames (6), wherein a power suction device (26) has a circular filter element (20) and the flow resistance of a filter element (20) is detected and displayed on a monitor, and wherein a precision suction device (27) has a sealing ring (24) which is guided in a suction device head (25) which is composed of solid material.

5. Apparatus according to one of the preceding claims, **characterized**
**in that** electrostatic grippers (28) and/or ultrasonic grippers are preferably used for repositioning purposes on the air side in the case of glass panels (2) which are to be coated.

6. Method for repositioning panels, in particular glass panels, of large surface area, comprising the following method steps:
a) the glass panels (2), which are delivered on conveying rollers of a transportation apparatus (3), are captured by means of a large number of stacking robots (1), which extend over the entire length of the glass panel (2) and are each installed on robot basic frames (19), by means of pivotable suction device frames (6) and suction devices (5) which are fastened to said suction device frames, and
b) the panel, in particular glass panel (2), which is captured in this way is jointly pivoted by the large number of stacking robots (1) and set down on a stacking shelf (4),
characterized
c) in that for repositioning the panels, in particular glass panels, of large surface area and of extreme size in the order of greater than 40 meters in length and greater than 6 meters in width, said panels can be held from the bath side or from the air side,
d) in that the suction device frames (6) are fitted with laser sensors (13) for coordinating the position of adjacent suction device frames (6), and
e) in that the robot basic frames (10) each have light field sensors (14) for coordinating the position of the entire glass panel (2), which light field sensors are able to contribute to superordinate data-related coordination of the adhesion elements involved over the entire region of the glass panel (2).

7. Method according to Claim 6, **characterized in that** power suction devices (26) and/or precision suction devices (27) are employed on the transverse webs of the suction device frames (6).

8. Method according to Claim 6 or 7, **characterized in that** electrostatic grippers (28) and/or ultrasonic grippers are preferably used for repositioning purposes on the air side in the case of glass panels (2) which are to be coated.

9. Method according to one of Claims 6 to 8, **characterized**
**in that** the stacking robots (1) are used individually, in particular in a rapid operating mode by direct pivoting-through in the air mode.

## Revendications

1. Dispositif pour le déplacement de panneaux à grande surface, notamment des panneaux en verre, possédant les caractéristiques suivantes :
a) un dispositif de transport (3) équipé de rouleaux de manutention, les rouleaux de manutention défilant dans deux bandes espacées qui défilent en parallèle, et les rouleaux de manutention étant entraînés individuellement,
b) une pluralité de robots empileurs (1) disposés les uns à côté des autres, lesquels possèdent respectivement deux bras principaux (12) pivotants, une articulation tournante (9) articulée à entraînement synchrone, un bras de robot (8) fixé de manière articulée à celle-ci et comportant une tête pivotante (7) et un cadre à têtes aspirantes (6) fixé à celle-ci,
c) une pluralité d'éléments d'adhérence (5) qui sont portés par des éléments jointifs transversaux disposés à la manière d'un peigne sur le cadre à têtes aspirantes (6), et
d) une ossature d'empilage (4) sur laquelle un panneau, notamment le panneau en verre (2), peut être déposé avec le côté air ou avec le côté bain en haut, dispositif avec lequel
e) pour le déplacement des panneaux à grande surface, notamment des panneaux en verre, dans des surdimensions extrêmes de l'ordre de plus de 40 mètres de long et de plus de 6 mètres de large, une prise en charge est possible depuis le côté bain ou le côté air, les rouleaux de manutention défilant dans deux bandes espacées qui défilent en parallèle et l'écart horizontal entre les rouleaux de manutention pouvant être modifié,
f) les cadres à têtes aspirantes (6) comportent des capteurs à laser (13) destinés à coordonner la position de cadres à têtes aspirantes (6) voisins en ce que les capteurs à laser (13) sont en mesure d'émettre des rayons laser destinés à la communication avec les cadres à têtes aspirantes (6) respectivement voisins, mais également de recevoir de tels rayons laser en tant que signaux de communication, afin qu'ils puissent coordonner la commande de mécanismes d'entraînement (11) d'un cadre de base de robot (10),
g) pour la coordination de la position de l'ensemble du panneau en verre (2), les cadres de base de robot (10) possèdent respectivement des capteurs de champ lumineux (14) qui sont en mesure de contribuer à la coordination informatique de niveau supérieur des éléments d'adhérence participants sur la totalité de la zone du panneau en verre (2), et
h) les rouleaux individuels du dispositif de transport (3) peuvent être déplacés dans leur position au moyen de servomoteurs spéciaux.

2. Dispositif selon la revendication 1, **caractérisé en ce que** les écarts entre les robots empileurs (1) utilisés sont conçus variables et la liaison des cadres à têtes aspirantes (6) entre eux est séparée et un cadre à têtes aspirantes (6) est respectivement associé à chaque robot empileur (1) sur le côté gauche et droit, les cadres à têtes aspirantes (6) étant en plus coordonnées entre eux au moyen des capteurs à laser (13) de tells sorte que ceux-ci agissent comme une liaison rigide.

3. Dispositif selon la revendication 2, **caractérisé en ce que** les cadres à têtes aspirantes (6) faisant respectivement partie d'un robot empileur (1) à gauche et à droite sont configurés de telle sorte que leurs embouts sont à longueur variable.

4. Dispositif selon l'une des revendications précédentes, **caractérisé en ce que** des têtes aspirantes de puissance (26) et/ou des têtes aspirantes de précision (27) et/ou des organes de préhension à ultrasons sont utilisés sur les éléments jointifs transversaux du cadre à têtes aspirantes (6), une tête aspirante de puissance (26) possédant un élément filtrant (20) de forme circulaire et la résistance de passage d'un élément filtrant (20) étant détectée et affichée sur un moniteur, et une tête aspirante de précision (27) possédant une bague d'étanchéité (24) qui est guidée dans une tête aspirante (25) en matière solide.

5. Dispositif selon l'une des revendications précédentes, **caractérisé en ce que** dans le cas de panneaux en verre (2) à enduire, des organes de préhension électrostatiques (28) et/ou des organes de préhension à ultrasons sont utilisés de préférence sur le côté air pour le déplacement.

6. Procédé pour le déplacement de panneaux à grande surface, notamment des panneaux en verre, comprenant les étapes suivantes :
a) les panneaux en verre (2) délivrés sur les rouleaux de manutention d'un dispositif de transport (3) sont saisis au moyen d'une pluralité de robots empileurs (1), qui s'étendent sur toute la longueur du panneau en verre (2) et qui sont respectivement installés sur un cadre de base de robot (19), par l'intermédiaire de cadres à têtes aspirantes (6) pivotants et des têtes aspirantes (5) qui y sont fixées, et
b) le panneau ainsi saisi, notamment le panneau en verre (2), est pivoté par la pluralité de robots empileurs (1) en commun et déposé sur une étagère d'empilage,
**caractérisé**
c) **en ce que** pour le déplacement des panneaux à grande surface, notamment des panneaux en verre, dans des surdimensions extrêmes de l'ordre de plus de 40 mètres de long et de plus de 6 mètres de large, une prise en charge est possible depuis le côté bain ou le côté air,
d) **en ce que** les cadres à têtes aspirantes (6) comportent des capteurs à laser (13) destinés à coordonner la position de cadres à têtes aspirantes (6) voisins,
e) **en ce que** pour la coordination de la position de l'ensemble du panneau en verre (2), les cadres de base de robot (10) possèdent respectivement des capteurs de champ lumineux (14) qui sont en mesure de contribuer à la coordination informatique de niveau supérieur des éléments d'adhérence participants sur la totalité de la zone du panneau en verre (2).

7. Procédé selon la revendication 6, **caractérisé en ce que** des têtes aspirantes de puissance (26) et/ou des têtes aspirantes de précision (27) sont utilisées sur les éléments jointifs transversaux des cadres à têtes aspirantes (6).

8. Procédé selon la revendication 6 ou 7, **caractérisé en ce que** dans le cas de panneaux en verre (2) à enduire, des organes de préhension électrostatiques (28) et/ou des organes de préhension à ultrasons sont utilisés de préférence sur le côté air pour le déplacement.

9. Procédé selon l'une des revendications 6 à 8, **caractérisé en ce que** les robots empileurs (1) sont utilisés individuellement, notamment dans un mode de fonctionnement rapide par basculement en mode pneumatique.
